# EUROPEAN PATENT SPECIFICATION

(11) **EP 2 271 781 B1**
(45) Date of publication and mention of the grant of the patent: **31.10.2012**
(21) Application number: 09735954.1
(22) Date of filing: 21.04.2009
(51) Int. Cl.: C22B 11/00, C22B 3/18

(54) **GREEN MINING: PROCESS OF CYANIDE-FREE BIOLEACHING AND BIOADSORPTION OF PRECIOUS METALS**
ÖKOLOGISCHER BERGBAU: VERFAHREN FÜR BIOLEACHING UND BIOADSORPTION VON EDELMETALLEN OHNE CYANID
EXPLOITATION MINIÈRE ÉCOLOGIQUE : PROCÉDÉ DE BIOLIXIVIATION ET DE BIOADSORPTION DE MÉTAUX PRÉCIEUX SANS CYANURE

(30) Priority: 21.04.2008 EP 08007723
(43) Date of publication of application: 12.01.2011
(73) Proprietor: B.R.A.I.N. Biotechnology Research And Information Network AG, 64673 Zwingenberg (DE)
(72) Inventor: ZINKE, Holger, 64646 Heppenheim/Sonderbach (DE); GABOR, Esther, 64673 Zwingenberg (DE)
(74) Representative: Blodig, Wolfgang
(86) International application number: PCT/EP2009/002908
(87) International publication number: WO 2009/130006

(56) References cited:
- EP-A- 0 432 935
- WO-A-97/14818
- GB-A- 2 068 927
- SU-A1- 1 661 233
- US-A- 4 769 223
- US-A- 4 898 827
- US-A1- 2008 081 359
- IGLESIAS N ET AL: "REFRACTORY GOLD-BEARING ORES: A REVIEW OF TREATMENT METHODS AND RECENT ADVANCES IN BIOTECHNOLOGICAL TECHNIQUES" HYDROMETALLURGY, ELSEVIER SCIENTIFIC PUBLISHING CY. AMSTERDAM, NL, vol. 34, no. 3, 1 January 1994 (1994-01-01), pages 383-395, XP000430417 ISSN: 0304-386X

## Description

### FIELD OF THE INVENTION

The present invention relates to a process of isolating a precious metal gold from particulate material such as a mineral ore or a mining waste material without the need for in situ cyanide leaching. Metal atoms and ions are separated and concentrated from the ore by adsorption by microorganisms and are subsequently released therefrom in a environmentally friendly process. The invention generally relates to the use of biomass for isolating a metal from an ore.

### BACKGROUND OF THE INVENTION

The recent decades have seen a continued depletion of high-grade mineral resources and, concomitantly, a growing demand for precious metals. The demand for gold is unbowed; other precious metals such as iridium, indium, and palladium get increasingly scarce due to their importance, particularly in the field of high-tech electronics and displays. At the same time, the awareness for environmental problems associated with conventional mining techniques has grown significantly, as well as the costs for the exorbitant amounts of energy required.

### Main deposits of precious metals

**Gold (Au)**: Gold is one of the rarest elements on earth. In seawater, which constitutes the largest reservoir of gold, its concentration is only 0.01 mg/m³, while on average 4 mg/t is found in the upper crust of earth. In this environment, gold mostly occurs as pure metal (Au°) or electrum (Ag/Au) and tiny inclusions are found in large volumes of material, usually rock. Furthermore, it is found (often in association with quartz) as telluride (AuTe₂) and selenide (AuSe₂) or locked in the lattice of minerals such as pyrite and arsenopyrite (invisible gold). Yields of gold obtained by commercial mining are currently between 0.5 and 13.7 g gold/t rock, with a tendency to increasingly exploit low-grade ores due to a shortage in higher grade ones.

**Silver (Ag)**: Silver is about 20 times more abundant than gold. The majority of silver commercially accessible to date is deposited as metallic silver. But also sulphidic minerals (Ag₂S, acanthite) and AgCl (cerargyrit) often occur. Like gold, also silver minerals are often found embedded in silica matrices (quartz) in particle sizes in the range of nano- to micrometers.

**Other precious metals (Pt, Pd, Ir, Ru, Rh, Os):** Precious metals other than gold or silver usually occur in conjunction with base metals, such as copper and nickel, and are recovered as side products in the raffination of these compounds.

### Conventional methods for mining precious metals

Traditionally, precious metals such as gold or silver have been recovered by placer (sediment) mining or hard rock mining using gravity and pyrometallurgical methods. Due to the exhaustion of metal-rich ores, hydrometallurgical techniques are increasingly employed to recover precious metals from low-grade sources. Methods for precious metal recovery, particularly gold, are extremely work-intensive and require the use of heavy machines as well as of hazardous and recalcitrant chemicals. Nowadays, about 90% of the common industrial processes for the recovery of precious metals are based on cyanidation methods, since cyanide is one of the very few substances that are able to dissolve gold. In order to allow cyanide ions or other compounds to access a large portion of the metal enclosed in its ores, ores are generally ground to small particle sizes. Depending on the specific mineral, particle sizes range from 1-2 mm down to diameters as small as 70 µm as obtained by fine grinding. Pulverization even allows particle sizes of about 2 µm.

Cyanide leaching is carried out at alkaline pH (pH 11-12) and commercial processes consume about 1.5-5 kg of lime per ton rock and 1.5-2.5 kg of sodium cyanide per ton rock, requiring leach times of 18-24 hours. Sulphide minerals generally dissolve at much slower rates than non-sulphidic ores, an effect that can be overcome by employing stronger cyanide solutions (12-20 kg/t) and longer leaching times (48-72 hours). Cyanidation leads to the solubilisation of the targeted metals, e.g. by
(1)

   2 Au + H₂O + ½ O₂ + 4 NaCN → 2 Na[Au(CN)₂] + 2 NaOH
(2)

   2 Ag + H₂O + ½ O₂ + 4 NaCN → 2 Na[Ag(CN)₂] + 2 NaOH
(3)

   Ag₂S + 4 NaCN → 2 Na[Ag(CN)₂] + Na₂S
(4)

   AgCl + 2 NaCN → Na[Ag(CN)₂] + NaCl

Subsequently, the solubilised metal can be recovered by precipitation with zinc-dust, as it was the industrial standard in the early 1950's:

2 Na[Au(CN)₂] + Zn → Na₂[Zn(CN)₄] + 2 Au

2 Na[Ag(CN)₂] + Zn → Na₂[Zn(CN)₄] + 2 Ag

Advancements in the 1970's have led to the adsorption of metal-cyanide complexes to activated carbon and later on to solid ion exchange resins. These adsorption methods have the disadvantage of high cost. Also, desorption of metals from the ion exchange resin is usually not trivial and requires the use of harmful reagents (e.g. thiocyanate) and regeneration of the resins with strong acids.

In some ores, precious metals are locked in such a way that they cannot be accessed by cyanidation. These so-called refractory ores typically comprise sulphide or carbonaceous minerals or silicates (quartz) and need special a pre-treatment before cyanide leaching. Examples for typical pre-treatments are oxidization of the ore by *chemical leaching* at elevated temperatures, *roasting* or *bacterial leaching*, all aiming at making the ore matrix more porous; i.e. accessible for the later cyanide treatment, or at removing indigenous carbon that would otherwise immobilize the just solubilised metals. Most of these processes are carried out under oxygen-rich, acidic conditions, in contrast to cyanidation, which requires an alkaline pH. Both the pre-treatment process itself as well as the necessary pH-shift from acid to alkaline significantly increases the cost of the recovery of precious metals. This problem is partially solved by an alkaline leaching pre-treatment described in patent application WO 2004/042094 A1.

**Amalgam processing**. The amalgamation of gold contained in ground rocks by the addition of mercury is still often applied in artisanal gold recovery. The mouldable gold-containing amalgam is separated from the rock and mercury is separated from gold by evaporation. This process has been performed since decades, mostly by individuals in South America and Africa exposed to noxious conditions, since about 1 kg of mercury is required to recover 1 g of gold.

### Impact of conventional metal leaching on the environment and on health

The damage to the environment as well as to human health by amalgam processing is undisputed: to date more than 5000 t of mercury have been directly released into the environment (50% in the atmosphere) only in South America without any efforts to avoid contamination (Korte, Spiteller et al. 2000). Even more severe appears the impact of cyanidation, since this is the most important technical process used globally today. On average, the production of 1 kg of gold requires 700 kg of sodium cyanide, leading to a volume of 1400 m³ of 0.05% sodium cyanide solution that needs to be disposed of. Generally, these cyanide and heavy metal contaminated waste waters are stored in open ponds without further treatment or are discharged in natural streams and rivers. It has been estimated that about 20,000 t of hydrogen cyanide evaporate from the surface of open disposal ponds per year (Korte, Spiteller et al. 2000). Since HCN has a half-life of 267 days, it will accumulate in the atmosphere where it may contribute to other climate-active compounds (e.g. CO₂ and methane). Due to the severe environmental impact of cyanidation, this process has been prohibited in the Czech Republic and Turkey. A United Nations Environment Programme (UNEP) international code for management of cyanide in gold mining (called APELL; http://www.unep.fr/pc/apell/publications/pdf files/apell-for-mining.pdf) has been developed.

### Bioleaching

The possibility to use predominantly acidophilic, autotrophic iron-oxidizing sulphur-oxidizing prokaryotes to recover precious and base metals from mineral ores and concentrates is known, [e.g. from (Rawlings and Johnson 2007)]. The development of this technology was inspired by the observation that certain bacteria, especially *Thiobacilli,* are able to solubilise heavy metal minerals by oxidizing Fe(II) to Fe(III) as well as sulphidic compounds to sulphate. This process is the major cause of natural weathering of sulphidic minerals.

By creating conditions that favour the growth of ore-decaying microorganisms, leaching of heavy metals from sulphidic minerals under aerobic conditions can be increased more than 100-fold compared to weathering without bacteria. Unfortunately, microbial leaching does not allow the direct oxidation, i.e. solubilisation of precious metals. However, degradation of minerals such as pyrite enclosing precious metal atoms or clusters can lead to the release of the trapped high-value compounds. While cheap *in situ* or dump/heap setups are generally used to bioleach base metals from low-grade rocks and minerals, more expensive (and more controlled) stirred-tank reactors are typically employed in the pre-treatment of mineral ores for the recovery of precious metals, such as Au and Ag. After the initial bacterial disintegration step, ores are subjected to a conventional cyanidation process, hazarding the environmental and health problems mentioned above EP 0 432 935 B1 discloses a method that avoids the addition of chemical-grade sodium cyanide by contacting gold ore with microorganisms that are capable of producing cyanide ions in culture. This method still suffers from the fact that cyanide, whether produced in a chemical or biological way, is a harmful reagent that needs to be disposed of in a proper way according to local legislation.

### Bioadsorption

A number of living microorganisms, but also nonviable, inactivated cells have the ability to bind metal ions. In the first case, metal binding can occur via adsorption to the cell surface or via active intracellular accumulation of metal ions. In the latter case of nonviable, inactivated cells - that is often referred to as *biosorption -* metal ion binding is believed to occur exclusively via surface adsorption. The biosorption capacity as a general characteristic of biomass results from the presence of chelating groups (e.g. carboxyl-, amide-, hydroxyl-, phosphate-, and thiol-groups) contributed by carbohydrates, lipids and proteins that are displayed on the cell surface. It has been described that amounts of metals of up to 50 % of the cell dry weight can be accumulated by biomass (Vieira and Volesky 2000). United States Patent 5,055,402 discloses a process for removing metal ions from aqueous solution, using a matrix prepared from metal-binding microorganisms that have been immobilized and heat-inactivated at temperatures of 300-500°C. EP 0 432 935 B1 describes the adsorption of soluble metal-cyanide complexes also from aqueous solution by living biomass.

WO 97/14818 describes a process of gold extraction comprising a basic flotation step followed by agitation for 6-10 minutes in the presence of a biomass of *Bacillus cereus* B5039 or *Chlorella vulgaris,* followed by a step of bioflotation for 12 to 15 minutes. An electric field of 0.5-2.0 V/cm is applied 0.5-1.0 minutes prior to the completion of agitation, and an electric field of 1.5-2.5 V/cm is applied during the step of bioflotation for 2.0-3.0 minutes. WO 97/14818 contains no indication whether any microorganism other than *Bacillus cereus* B5039 or *Chlorella vulgaris* may me useful for isolation of metal from mineral ores.

It is therefore an object of the present invention to provide a process of isolating precious metals from particulate material such as mineral ore containing the metal without the need for cyanide leaching or amalgam processing. It is another object of the invention to provide a process for isolating precious metals that are essentially insoluble in water at neutral, pH from a particulate material containing the metal by bioadsorption.

### SUMMARY OF THE INVENTION

The above objects have been implemented by a cyanide-free process of isolating the precious metal gold from a particulate material containing particles of said precious metal in elemental form, comprising the following steps:
(i) preparing an aqueous mixture containing said particulate material and biomass comprising eubacteria or archaea having an S-layer;
(ii) incubating said aqueous mixture of step (i) for allowing binding of said precious metal to said biomass;
(iii) separating the biomass having bound metal from the aqueous mixture of step (ii); and
(iv) isolating the metal from said biomass separated in step (iii), as further defined by claim 1.

The invention also provides a use of biomass for isolating a metal such as a metal in elemental from a particulate material such as a mineral ore, according to claim 12. Described is a metal obtained or obtainable by the process of the invention.

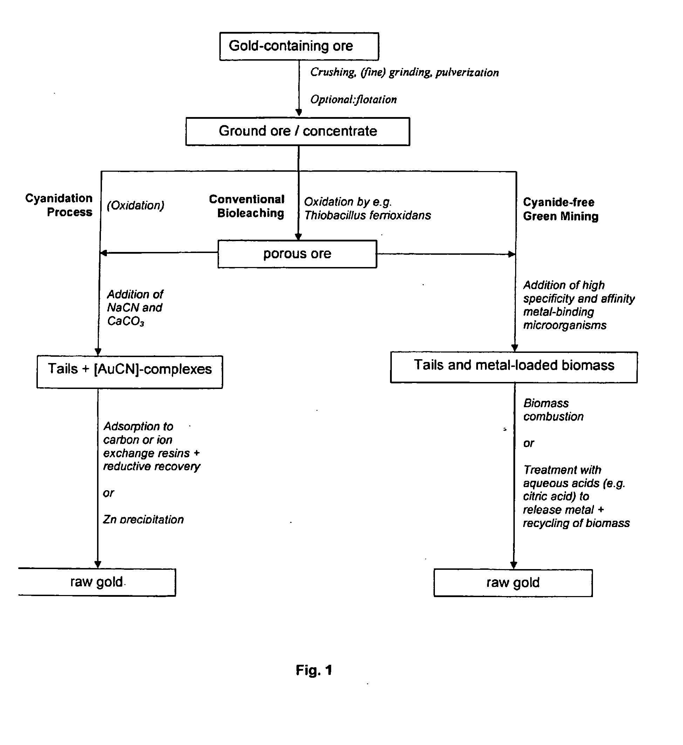

The inventors of the present invention have developed a procedure for isolation of precious metals from particulate material such as mineral ores using certain biomass. The biomass binds the metal by cell components of the organisms. After separation of the biomass from unbound material of the particulate material, the metal can be isolated from the biomass. The invention allows isolating the metal from particulate material that contains only low amounts of the metal without the use of hazardous cyanide leaching and/or amalgam processing. Therefore, the process of the invention provides an environmentally innocuous access to valuable metals that requires little energy and avoids pollution. The present invention is a break-through in the sustainable exploitation of low-grade metal sources, obviating the use of harmful and environmentally deleterious agents, particularly cyanide (Figure 1).

For carrying out the invention, microorganisms are cultivated that are known to be able to specifically adsorb the metal and metal clusters of interest. The ore used in step (i) is preferably crushed, milled or pulverized before contacting it with the microbial culture and may be pre-treated using methods suitable to facilitate metal release and solubilisation, such as oxidative bioleaching or incubation with microorganisms that produce corrosive metabolites. The process preferably takes place in a continuous-flow, stirred-tank reactor or open pond such as used in waste-water treatment plants. In this environment, parameters that are important for microbial growth (pH, temp., nutrients) can be easily controlled and therefore, microbial consortia can be stably maintained over space and time. In step (iii), metal-loaded microorganisms are separated from the ore suspension e.g. by collecting the foam floating on top of the biomass/ore liquid mixture or the sludge settling on the bottom of the reaction vessel or stirred open pond enriched with said biomass. In step (iv) the metal is isolated from said biomass separated in step (iii) e.g. by washing with dilute acids (e.g. aqueous citric acid) or bases (e.g. 0.1 M NaOH), allowing the recirculation of biomass. Alternatively, the biomass may be combusted and the elemental metal is retained. Microbial species that may be used in the scope of this invention include bacteria, archaea, fungi and algae.

In the invention, a huge concentration effect can be achieved by binding metal from low grade particulate material to the biomass. Thus, the biomass separated in step (iii) typically has a mass that is significantly lower than the mass of the particulate material used in step (i). In one embodiment, the mass of the biomass separated in step (iii) is, in a dry state, at most 1/10 of the mass of the particulate material used in step (i). In another embodiment, the mass of the biomass separated in step (iii) is, in a dry state, at most 1/100 or, in a further embodiment, at most 1/1000 of the mass of the particulate material used in step (i). This huge concentration effect achievable in the process of the invention allows to transport the biomass separated in step (iii), optionally in a dried state, over long distances, where transport of an amount of the particulate material containing the same amount of metal would not be economical. Thus, the invention allows separation of the location where steps (i) to (iii) are performed, which may be the location where huge amounts of the particulate material are available, from the location where step (iv) is performed. Thus, a central facility for carrying out step (iv) may be used for two or more sites where steps (i) to (iii) are carried out. Accordingly, between steps (iii) and (iv), a step of transferring or transporting the biomass separated and, optionally, dried in step (iii) to a facility where step (iv) is carried out can be performed.

Prior art processes frequently use immobilised microorganisms in bioreactors forming a matrix for bioadsorption. The processes of step (i) to (iii) of the present invention are advantageously carried out in stirred open ponds instead of bioreactors, and do not require immobilisation of the biomass on a carrier. The biomass used in the aqueous mixture of step (i) of the process of the invention may be used in suspension without being immobilized on a carrier. **DETAILED DESCRIPTION OF THE INVENTION**

In the present invention, "metal" means a metal in free, elemental form. The metal of the invention is the precious metal gold. A metal in elemental form has bonds between metal atoms and oxidation state 0. If the metal of the invention is in elemental form, it may form nanoscale particles such as metal clusters. Nanoscale particles of said metal and metal clusters may have ligands that occupy free valencies of metal atoms located on the surface of the nanoscale metal particles or clusters. Metal clusters may comprise from 2 to 1000 metal atoms. In another embodiment, metal clusters may comprise from 3 to 500 metal atoms. In further embodiments, metal clusters may comprise from 5 to 400 or from 20 to 300 metal atoms. In general, nanoscale particles have a size of < 500 nm, in another embodiment of < 100 nm, in a further embodiment of < 50 nm, and in a still further embodiment of < 10 nm. A metal in elemental form is typically insoluble in aqueous media. However, the nanoscale elemental metal or metal clusters may be dispersed or dispersible in aqueous media, e.g. in the form of a colloid.

In the process of the invention, the metal to be isolated may undergo a chemical reaction e.g. when bound to or separated from said biomass. Thus, the metal isolated in step (iv) of the process of the invention may be in a chemical form different from the chemical form at the outset of the process of the invention. The present invention covers processes wherein the chemical state of a metal to be isolated changes in the course of the process. It is of course possible that the particulate material used in the process of the invention contains a metal to be isolated in two or more different chemical states or compounds. Similarly, the metal isolated in step (iv) may contain said metal in two or more different chemical states or compounds. Moreover, the particulate material used in the process of the invention may contain two or more different types of metals, and the metal isolated in step (iv) may also contain two or more different types of metals.

The particulate material used in step (i) of the invention may be any material that contains a metal to be isolated according to the process of the invention. The particulate material is typically a mixture of several chemical compounds. In typical cases, the particulate material is a mineral ore. The particulate material may contain high amounts of silicates or quartz. The mineral ore may be a mining waste material obtained in a process of isolating a desired component other than the metal of the invention from a mineral ore. The particulate material may for example be or contain a sulfidic mineral material such as pyrite. In one embodiment, the metal, notably the elemental metal, of the invention is extremely fine distributed in the particulate material such as an elemental metal locked in the crystal lattice of a mineral such as pyrite. Such extremely fine distributed or dispersed elemental metal is generally referred to as "invisible metal"; if the metal is gold, it is referred to as "invisible gold".

In step (i) of the process of the invention, an aqueous mixture is prepared from said particulate material and the biomass of the invention. The particulate material to be used in step (i) should be finely ground. For this purpose, step (i) may be preceded by a grinding step. The particulate material may have an average particle size of at most 5 mm. Alternatively, the particulate material may have an average particle size of at most 1 mm, of at most 400 µm, or of at most 100 µm. In a further embodiment, the particles are smaller than 100 µm or smaller than 50 µm, which may be achieved by sieving of a finely ground material. The yield of the process of the invention is the higher, the smaller the particle size of the particulate material used in step (i).

Step (i) is typically conducted in large tanks as reactors e.g. as are used in waste-water treatment. The reactor preferably contains an agitation system for agitating the aqueous mixture. The reactor may be a stirred-tank reactor and can be operated in a batch or continuous-flow mode. The reactor is equipped with devices for measuring and controlling parameters such as temperature, pH, nutrient content etc. Such means are known in the art of microbiology. The aqueous mixture prepared in step (i) includes media with nutrients required for the growth of the biomass. Further, the aqueous mixture contains the biomass used for binding the metal to be isolated using the process of the invention. Typically, the biomass is added to the reactor at such an amount that the concentration in the reactor allows for further growth of the biomass. For this purpose, one or more pre-cultures are generally grown in separate reactors for maintaining sufficiently large amounts of the biomass in aqueous suspension to be used.

The content of particulate material (such as mineral ore) in the aqueous mixture of step (i) may, for example, be between 1 kg and 500 kg particulate material per m³ of the aqueous mixture. Alternatively, said content is between 5 kg and 100 kg particulate material per m³ of the aqueous mixture.

The present invention makes use of biomass containing microorganisms that naturally - or by state-of-the-art genetic engineering - have the potential to specifically bind metal atoms or clusters. This property is exploited to adsorb metals released from the particulate material such as ores on the surface of living microorganisms, allowing the separation of metal (attached to the surface of biomass) from remaining ore and rock.

The biomass to be used in the invention is or comprises an organism selected from the classes of eubacteria, and archaea. The organism to be used depends on the type of metal to be isolated, on the type of particulate material used, and on the chemical state of the metal present in the particulate material. Particularity suited organisms for a given ore can be identified following the procedure of example 1 or example 2.

The biomass used in the invention may be viable biomass. In general, said biomass grows in the course of step (ii) of the process of the invention. However, not all biomass present in steps (i) and (ii) must be viable. For example, biomass may partially decay during steps (i) and (ii); such dead biomass may also have bound metal and may therefore be worth being separated in step (iii).

The inventors have surprisingly found that eubacteria and archaea having an S-layer have a high propensity of binding gold, notable gold in elemental finely dispersed form. Therefore, the biomass used in the invention is or contains an organism belonging to eubacteria or archaea and said organism contains an S-layer. An S-layer is a paracrystalline, porous, mono-layered assembly of (glyco)protein molecules which coats the surface of some bacteria and archaea. S-layer lattices can have oblique, square or hexagonal symmetry and are made of identical glycoprotein subunits with center-to-center spacings of 2.5 to 35 nm. S-layers are monomolecular assemblies of, typically, identical subunits and have pores of identical size and morphology. Sequence identities among S-layer proteins from different organisms are not high. It is believed that the pore structure of S-layers is an important factor for the high propensity of binding gold in elemental finely dispersed form. Review articles on S-layers are, for example, the following: J. Bacteriol. 182(4), 2000, 859-868; J. Struct. Biol. 1998 Dec 15, 124 (2-3) 276-302; Can. J. Microbiol. 2005 Sep;51(9):731-43; J. Struct. Biol. 2007 Nov;160(2):115-24; FEMS Microbiol Lett. 2007 Feb;267(2):131-44. A review on Lactobacillus surface layers is found in FEMS Microbiology Reviews 29 (2005) 511-529.

Eubacteria and archaea having an S-layer (in addition to those disclosed herein) can be easily identified e.g. from known databases on microorganisms, DNA databases or protein databases. For example, the Swissprot database (www.expasy.ch/sprot/) may be searched for "S-layer", yielding 1475 search hits from a large number of different microorganisms on the filing date of the present patent application. Protein and DNA sequences encoding S-layer proteins for a large number of eubacteria and archaea are known and can be extracted from such databases. Some examples are as follows. The S-layer protein of *Halobacterium salinarum* in the Swissprot database has entry number Q9HM69. Cloning and sequencing of the cell surface glycoprotein gene of halobacteria is described in J. Biol. Chem. 262 (1987) 9724-9729. The S-layer protein of *Lactobacillus acidophilus* in the Swissprot database has entry number P35829. Purification, expression and sequences thereof are described in J. Bacteriol. 175:6089-6096 (1993). The S-layer protein of *Bacillus sphaericus* in the Swissprot database has entry number P38537. Cloning and sequencing of the respective gene was described in J. Bacteriol. 171:4178-4188 (1989). The S-layer protein of *Deinococcus radiodurans* has Swissprot entry number P56867. Cloning and sequencing of the respective gene was described J. Bacteriol. 169:5216-5223 (1987).

In the present invention, said biomass comprises or consists of one or more organisms selected from *Bacillus sphaericus* such as *Bacillus sphaericus* CCM2177; Lactobacillus such as *Lactobacillus acidophilus;* Halobacterium such as *Halobacterium salinarum;* Xanthomonas such as *Xanthomonas campestris;* and Shewanella such as *Shewanella putrefaciens.* More preferably, the biomass comprises organisms selected from *Bacillus sphaericus* such as *Bacillus sphaericus* CCM2177; Lactobacillus such as *Lactobacillus acidophilus;* and Halobacterium such as *Halobacterium salinarum.*

If the particulate material contains mostly elemental gold or gold locked in the lattice of pyrite or arsenopyrite, organisms suited are bacteria and archaea of the phyla of firmicutes (including Bacilli, Clostridia, Mollicutes, and Thermolithobacteria), Proteobacteria (including α-Proteobacteria, γ-Proteobacteria, and ε-Proteobacteria), Bacteroidetes (including Chlorobi, Flavobacteria, Sphingobacteria), Actinobacteria (including Acidimicrobidae and Actinobacteridae), Planctomycetes, Deinococci, Fusobacteria, Euryarchaea (including Archaeoglobi, Halobacteria, Methanobacteria, Methanococci, Methanomicrobia, Methanopyri, Thermococci, Thermoplasmata), Crenarchaea (including Thermoprotei), and Nanoarchaea. Organisms carrying an S-layer are preferred.

If the particulate material contains mostly gold compounds such as gold selenide or telluride, organisms that produce polysaccharides, preferably negatively charged moieties attached to the cellular surface, such as members of the fungal phylum of Basidiomycetes (including Schizophyllaceae and Typhulaceae) and Ascomycetes (including Hypocreaceae)may be included. Alternatively, metal-reducing cyanobacteria, such as members of the phyla Chroococcales (including Aphanocapsa, Aphanotece, Chamaesiphon, Chondrocystis, Chroococcus, Chroogloeocystis, Crocosphaera, Cyanobacterium, Cyanobium, Cyanodictyon, Cyanosarcina, Cyanothece, Dactylococcopsis, Gloeocapsa, Gloeothece, Halothece, Johannesbaptistia, Merismopedia, Microcystis, Radiocystis, Rhabdoderma, Snowella, Synechococcus, Synechocystis, Thermosynechococcus, Woronichinia), Gloeobacteria, Nostocales (including Microchaetaceae, Nostocaceae, Rivulariaceae, Scytonemataceae), Oscillatoriales (including Arthronema, Arthrospira, Blennothrix, Crinalium, Geitlerinema, Halomicronema, Halospirulina, Hydrocoleum, Jaaginema, Katagnymene, Komvophoron, Leptolyngbya, Limnothrix, Lyngbya, Microcoleus, Oscillatoria, Phormidium, Planktothricoides, Planktothrix, Plectonema, Pseudanabaena, Pseudophormidium, Schizothrix, Spirulina, Starria, Symploca, Trichodesmium, Tychonema), Pleurocapsales (including Chroococcidiopsis, Dermocarpa, Dermocarpella, Myxosarcina, Pleurocapsa, Solentia, Stanieria, Xenococcus), Prochlorales, and Stigonematales (including Capsosira, Chlorogloeopsis, Fischerella, Hapalosiphon, Mastigocladopsis, Mastigocladus, Nostochopsis, Stigonema, Symphyonema, Symphonemopsis, Umezakia, Westiellopsis) or prokaryotes carrying an S-layer, such as firmicutes (including Bacilli, Clostridia, Mollicutes, and Thermolithobacteria), Proteobacteria (including α-Proteobacteria, γ-Proteobacteria, and ε-Proteobacteria), Bacteroidetes (including Chlorobi, Flavobacteria, Sphingobacteria), Actinobacteria (including Acidimicrobidae and Actinobacteridae), Planctomycetes, Deinococci, Fusobacteria, Euryarchaea (including Archaeoglobi, Halobacteria, Methanobacteria, Methanococci, Methanomicrobia, Methanopyri, Thermococci, Thermoplasmata), Crenarchaea (including Thermoprotei), and Nanoarchaea may be included.

If the particulate material contains mostly palladium compounds, polysaccharide-producing fungi as well as algae with reductive capacity may be included, such as Basidiomycetes (including Schizophyllaceae and Typhulaceae), Ascomycetes (including Hypocreaceae), Chroococcales (including Aphanocapsa, Aphanotece, Chamaesiphon, Chondrocystis, Chroococcus, Chroogloeocystis, Crocosphaera, Cyanobacterium, Cyanobium, Cyanodictyon, Cyanosarcina, Cyanothece, Dactylococcopsis, Gloeocapsa, Gloeothece, Halothece, Johannesbaptistia, Merismopedia, Microcystis, Radiocystis, Rhabdoderma, Snowella, Synechococcus, Synechocystis, Thermosynechococcus, Woronichinia), Gloeobacteria, Nostocales (including Microchaetaceae, Nostocaceae, Rivulariaceae, Scytonemataceae), Oscillatoriales (including Arthronema, Arthrospira, Blennothrix, Crinalium, Geitlerinema, Halomicronema, Halospirulina, Hydrocoleum, Jaaginema, Katagnymene, Komvophoron, Leptolyngbya, Limnothrix, Lyngbya, Microcoleus, Oscillatoria, Phormidium, Planktothricoides, Planktothrix, Plectonema, Pseudanabaena, Pseudophormidium, Schizothrix, Spirulina, Starria, Symploca, Trichodesmium, Tychonema), Pleurocapsales (including Chroococcidiopsis, Dermocarpa, Dermocarpella, Myxosarcina, Pleurocapsa, Solentia, Stanieria, Xenococcus), Prochlorales, and Stigonematales (including Capsosira, Chlorogloeopsis, Fischerella, Hapalosiphon, Mastigocladopsis, Mastigocladus, Nostochopsis, Stigonema, Symphyonema, and Symphonemopsis, Umezakia, Westiellopsis).

Microorganisms carrying other homologous or heterologous metal-binding or modifying compounds than S-layers, polysaccharides or reducing enzymes, for example metallothioneines, phytochelatins or surface-bound natural metal chelators (e.g. siderophores) may be included.

If said metal is elemental gold, said biomass may comprise an organism belonging to the genus Bacillus such as *Bacillus sphaericus* CCM2177; Lactobacillus such as *Lactobacillus acidophilus;* Deinococcus such as *Deinococcus radiodurans;* Halobacterium such as *Halobacterium salinarum;* Escherichia such as E. *coli* K-12; Arthrobacter such as *Arthrobacter globiformis;* Xanthomonas such as *Xanthomonas campestris;* Pseudomonas such as *Pseudomonas fluorescens;* Shewanella such as *Shewanella putrefaciens;* Trichoderma such as *Trichoderma reesei; Microcystis* sp, and/or *Anabaena* sp.

If said metal is a gold compound (such as a water soluble gold compound or a water-insoluble gold compound), notably a gold (III) compound, said biomass may comprise Bacillus such as *Bacillus sphaericus* (e.g. *Bacillus sphaericus* DSM396 or CCM2177) or *Bacillus fusiformis; Deinococcus radiodurans;* Corynebacterium such as *Corynebacterium glutamicum;* Escherichia such as E. *coli* K-12; Arthrobacter such as *Arthrobacter globiformis;* Xanthomonas such as *Xanthomonas campestris;* Pseudomonas such as *Pseudomonas fluorescens;* Shewanella such as *Shewanella putrefaciens;* Schizophyllum such as *Schizophyllum commune;* Trichoderma such as *Trichoderma reesei;* Sclerotium such as *Sclerotium rolfsii; Microcystis* sp; *Anabaena* sp; and/or *Aphanizomenon* sp.

If said metal is palladium, notably a palladium (II) compound, and said biomass may comprise Shewanella such as *Shewanella putrefaciens;* Schizophyllum such as *Schizophyllum commune;* Trichoderma, such as *Trichoderma reesei; Microcystis* sp, *Anabaena* sp; or *Aphanizomenon* sp.

Suitable growth conditions and nutrient requirements for the organisms mentioned above can be obtained from the general prior art on microbiology. Suitable growth conditions are also provided by collections of microorganisms such as the American Type Culture Collection (ATCC) or the German Collection of Microorganisms and Cell Cultures (Deutsche Sammlung von Mikroorganismen und Zellkulturen GmbH, DSMZ) where members of the classes of microorganisms mentioned above can be obtained from.

Depending on the composition of the particulate material, it can be considered to combine two or more microorganisms in said biomass to recover different chemical forms of metal or different types of metals in parallel.

In step (ii) of the process of the invention, the aqueous mixture prepared in step (i) is incubated for allowing binding of said metal by said biomass. The incubation time depends on the rate of binding. Generally, the incubation time is between 0.5 hours and 96 hours, preferably between 0.5 hours and 48 hours, more preferably between 1 and 48 hours, more preferably between 1 hour and 24 hours and most preferably between 3 and 24 hours. The temperature of incubation depends mostly on the type of biomass used. Temperature control may be used for controlling growth of said biomass. During incubation, parameters in the aqueous mixture such as pH, nutrient content, temperature etc. are monitored and, if necessary, controlled for maintaining desired incubation conditions.

In step (iii), said biomass having bound metal is separated from the mixture of step (ii). Known methods may be used for the separation. For example, the particulate material may be allowed to settle; the biomass may be separated from the supernatant by centrifugation or filtration. Alternatively, a gas such as air may be blown into the reactor or pond for forming a layer of floating biomass, e.g. in a foam layer, on the surface of the aqueous mixture; the floating biomass may then be skimmed off. The separated biomass may, depending on the subsequent step, be dried for facilitating storage and/or transport of the biomass before step (iv) is carried out.

In step (iv), the metal bound to the biomass is isolated from said biomass. The metal may for example be desorbed from the biomass in a liquid phase using acidic or basic conditions. Alternatively, the biomass may be combusted to destroy and remove organic matter of said biomass. The metal may purified from the residue and or ashes of the biomass.

The process of the invention may be combined with process steps used for isolating metals from metal ores known from prior art. In order to facilitate access of the biomass of the invention to metal particles or compounds present in the particulate material, a known bioleaching step may be used in combination with the invention. For instance, if said particulate material is a sulfidic ore such as pyrite, sulfide-oxidizing bacteria such as Thiobacilli may used for at least partially degrading the sulfidic mineral. Such bioleaching is described by (Rawlings and Johnson 2007). This treatment may be carried out before step (i) of the invention or concurrently with step (i) of the invention by adding the bioleaching organism to the aqueous solution of step (i). Furthermore, bioloeaching organisms, such as *T. ferrooxidans, T. thiooxidans, Leptospirillum ferrooxidans, T. organoparus, Thermothrix thiopara, Sulfolobus acidocaldarius,* and *S*. *brierleyi* may be provided with a metal-binding S-layer, using molecular engineering techniques known in prior art. Besides S-layers, also other metal-binding structures, such as metallothioneines, phytochetatins, or suitable polysaccharides may be introduced into said organisms in order to increase their metal-binding capacity. These engineered organisms, able to degrade minerals, such as pyrite and arsenopyrit, and able to bind released metals or metal compounds can then be used as biomass in step (i) of the present invention. The process described in US 2007/107550 may also be used for the pre-treatment of recalcitrant ores, whereby the hydrometallurgical treatment step is replaced by the process of the present invention.

### BRIEF DESCRIPTION OF THE FIGURES

Figure 1. Conventional recovery of precious metals (example gold) versus process of this invention.
Figure 2 shows metal recovery by microbial cell cultures.

### METHODS

### Isolation of organisms suitable for the present invention

Microorganisms, particularly bacteria, archaea, fungi and algae that have the required metal-binding affinity and specificity can be isolated from environmental sources, using classical microbiological techniques. Environmental sources (habitats) that contain organisms suitable for the present invention are, however not exclusively, sediments and waters exposed to heavy metal or radionuclide contamination, such as acid mine drainages, electroplating effluents, mining waste piles, industrial effluents, and waste water treatment plants. Microorganisms viable and competitive in these environments often have adopted strategies to efficiently bind and immobilize heavy metals either on their surface or in their interior in order to reduce their toxicity. Typically, cell envelopes of microorganisms exhibit negative charges, enabling the adsorption of cationic metals. The main functional groups that contribute to this negative charge are phosphate moieties and carboxylic groups. Surprisingly, we have found that some microbial species are also able to efficiently bind metallic, i.e. non-charged metal clusters.

Microbial isolates or strains comprised in already existing strain collections have to be tested for their ability to remove (specific) precious metals from solution as well as for their metal binding capacity. This is done by incubating lab-scale shaking flask cultures with relevant concentrations of precious metal for several hours (see examples 1 and 2). In the invented process, typical low grade gold ores containing, 1 - 10 g of gold per t of rock, are crushed and pulverized, respectively. The resulting material is mixed with cultivated microorganisms to obtain an ore suspension of 5 to 100 kg/m³ solid particle load, corresponding to 5 mg to 1 g of gold per cubic meter of suspension. Consequently, test metal concentrations in the lab-scale experiments should range from 25 nM to 5 µM.

### Cultivation and harvest of microorganisms for cyanide-free bioleaching

The invention may be carried out using big, open outdoor tanks, similar to reaction vessels used in wastewater treatment plants. In these vessels, microorganisms are cultivated, using cheap bulk growth substrates, such as molasses. Specific growth conditions, e.g. pH, nutrient concentration and composition, and aeration rates, need to be established for the desired set of microorganisms used in a given project. Techniques to stably maintain desired microbial populations in open systems are well known to those skilled in the art. Also the recovery of biomass sludge is well established.

Cells of *Nocardia* sp. are known to be covered by S-layer protein making them comparatively hydrophobic, which has been identified as a major cause of foaming in activated sludge (Iwahori, Tokutomi et al. 2001). While in wastewater treatment, foaming is not desired, this bacterial property can be used advantageously in the scope of the present invention, since foam, comprising a substantial portion of bacterial biomass, can be easily skimmed from the surface of cultivation ponds. The formation of foam can be enhanced by blowing air into the aqueous suspension, which will lead to the accumulation of organisms having bound metal at the surface of the suspension.

Organisms that do not naturally have metal-binding components can be provided with components allowing binding of the metal of the invention by genetic engineering. For instance, DNA fragments encoding genes or pathways that lead to the formation of metal-binding or metal-immobilizing structures can be introduced into wild-type strains, using techniques known to those skilled in the art. The present invention makes use of microorganisms that naturally - or by genetic engineering - have the potential to bind precious metal atoms or clusters. This property is exploited to immobilize metals released from ores by living microorganisms, allowing the separation of metal (attached to the biomass) from residual ore and rock.

Examples of natural or genetically-engineered components of organisms that may be used for binding the metal of the invention are the following. Among the following compound classes, S-layers are preferred.

**Metallothionines**. These metal-chelating polypeptides have been identified in many groups of organisms, including mammals, nematodes, fungi, and bacteria. Metallothioneines are characterized by an extremely high cysteine content of up to 33% arranged in (Cys-X-X-Cys) or (Cys-X-Cys) clusters and the absence of aromatic and hydrophobic amino acids.

**Phytochelatins**. Phytochelatins typically occur in plants and algae and are short, non-translationally synthesized polypeptides with variously repeating gamma-glutamylcysteine units (γGlu-Cys)nGly (n = 2 - 11). Synthetic phytochelatins [(Glu-Cys)nGly] have the advantage that they can be synthesized by the ribosomal machinery and that in some cases they bind metals even more effectively than the natural phytochelatins.

**S-layers**. Paracrystalline proteinaceous surface layers (S-layers) occur as surface structures in almost all major phylogenetic groups of bacteria and in almost all archaea (Sara and Sleytr 2000). The proteins (40-200 kDa) are secreted and subsequently self-assemble on the bacterial membrane, forming a very regular nano-porous structure (30-70% porosity). S-layer proteins constitute up to 20% of all cellular proteins. Due to their high content in hydrophobic amino acids, S-layer lattices in general render prokaryotic cell walls less hydrophilic, which can lead to increased foaming during cultivation. Immobilization of metals on S-layer templates has been used in nanotechnology to synthesize metallic nanoclusters of the precious metals Au (Dieluweit, Pum et al. 1998; Györvary, Schroedter et al. 2004) and Pt and Pd (Wahl, Mertig et al. 2001).

**Polysaccharides**. Some microorganisms produce biopolymers, e.g. polysaccharides that are able to bind 0.1 mg to 1.4 g metal/g isolated polymer, depending on the microorganism under investigation and the specific metal (Gutnick and Bach 2000). Binding generally occurs via electrostatic interactions between negatively charged groups in the biopolymer and the positively charged metal or via chelation of the metal by hydroxyl groups.

### Example 1: Removal of metal ions and metal clusters by microbial biomass in solution

### Experimental set-up

Microbial strains including strains from bacteria, archaea, fungi and algae were cultivated at the 50-ml scale according to standard microbiological techniques using the indicated growth conditions (see Table 1). In the early stationary growth phase, metals were added to the cultures to a final concentration of 3 µM, corresponding to a total amount of 25 µg of gold and 14 µg of palladium, respectively. Metals were supplied as Au clusters (Sigma, 3-5.5 nm diameter), HAuCl₄ (Sigma) and Pd(NH₃)₄Cl₂·H₂O (Sigma). The used metal concentrations mimic the amount of metals typically found in low-grade ores. Cultures were incubated with the model ore for 24 h before the biomass was collected by centrifugation (if metal ions were added) and filtration (if metal clusters were added) in order to avoid co-sedimentation of clusters in the latter case. Biomass samples were washed with sterile, deionized water and analyzed by ICP-MS (Inductively Coupled Plasma Mass Spectrometry) according to DIN EN ISO 11885 for their content in Au and Pd, respectively. Data were related to the dry weight of biomass present in the cultures. Before ICP-MS analysis, samples were desintegrated by nitrohydrofluoric acid and microwave treatment, leading to the oxidation and solubilization of all comprised metals.

### Results

In step 1, organisms were grown in simple standard growth media, then (step 2) cells were incubated with metal ions and clusters, respectively, before they were separated from the liquid phase (step 3) in order to analyse the biomass for the amount of accumulated heavy metal (step 4).

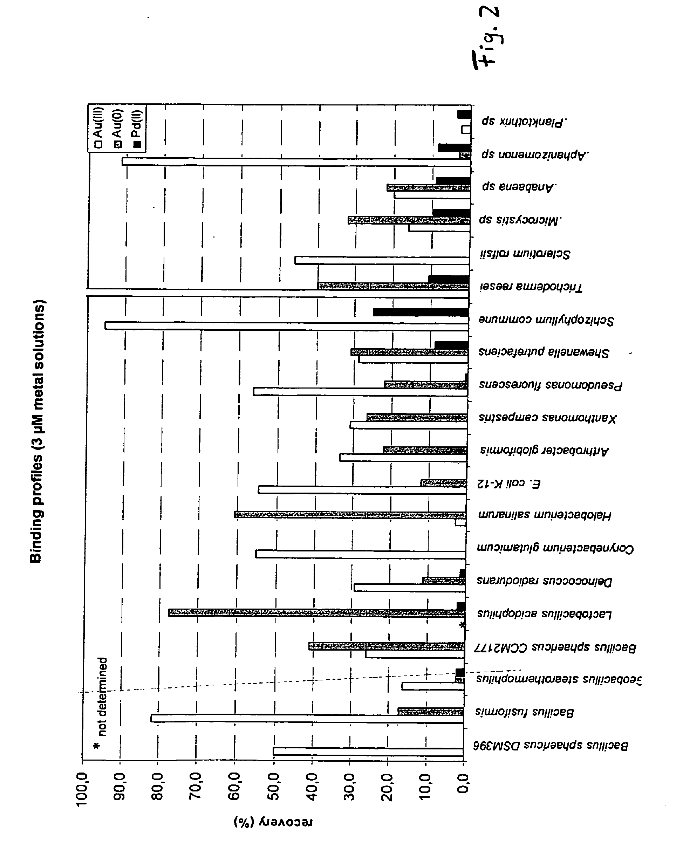

Surprisingly, a broad range of microorganisms turned out to be suited for the present invention, i.e. the accumulation of metals from model ores, including prokaryotic organisms, fungi, and algae (Figure 2). Except for the archaeal *H. salinarum,* cultures of all organisms were able to accumulate Au(III) to some extent, with *B. sphaericus* DSM396, *C. glutamicum, E. coli, P. fluorescens* and *S*. *rolfsii* immobilizing 40-60 % of the supplied metal ions, and *B*. *fusiformis, S. commune, T. reesei* and *Aphanizomenon* sp. binding even 80-100 %.

Metal binding profiles of the three investigated metal species were distinct and characteristic for each microorganism. Not all organisms able to accumulate ionic gold were also able to bind Pd(II), the affinity for palladium ions being generally lower than for gold ions. Consequently, electrostatic interactions between negatively charged cell and positively charged metal ions cannot exclusively account for the observed metal binding capacity of the studied organisms, but features conferring affinity towards specific metal (compounds) do exist (see above). Therefore, organisms with suitable binding profiles can be selected according to the specific needs of a mining operation.

For instance, *S*. *putrefaciens, S. commune,* and *T. reesei,* all known producers of polysaccharides, were able to recover 9-25% of the supplied palladium, demonstrating that microbial strains with satisfying affinity towards group VIIIb metals do exist and can be used to practice the present invention.

Surprisingly, particularly good binders of metallic Au(0) clusters were found among (bacterial and archaeal) organisms known to carry S-layers. For instance, cultures of B. *sphaericus* CCM 2177, *L. acidophilus,* and *H. salinarum* were able to accumulate substantial amounts (42 - 78 %) of the supplied metal clusters. While it is known that certain S-layers confer affinity towards specific metal ions, the direct binding of atomic clusters of Au(0) by microbial biomass has not yet been described.

### Example 2: Metal-binding capacity of microbial biomass

### Experimental set-up

Experiments were principally carried out as described for Example 1. Cultures were supplied with 3 µM Au(III), representing the gold content of 1 to 10 g of a low grade model ore, and 3 mM Au(III), mimicking the gold content of a corresponding high grade model ore. Absolute amounts of gold accumulated by the biomass as determined by ICP-MS were normalized by the amount of biomass (expressed as g dry weight) contained in each 50-ml culture.

### Results

The performance in metal recovery of a microbial culture added to an ore suspension is not only determined by the added culture volume, but also by the biomass density of this culture obtained in a given nutrient solution. In order to point out this correlation, the Au(III) binding capacities of the studied organisms, i.e. the amount of gold accumulated by a given amount of biomass, are given in Table 2 for two different metal concentrations.

Generally, metal loads of biomass were 100- to 800-fold higher if more Au(III) was supplied, indicating that in a low-grade ore, the maximal metal binding capacity of the microbial cells is far from being exhausted. Only in the case of *P. fluorescens,* and *D. radiodurans,* metal loads at 3 µM and 3 mM initial Au(III) concentration were almost identical, suggesting that the maximal binding capacity was already reached.

Highest metal loads in the high grade model ore were observed for the prokaryotes *G*. *stearothermophilus* and *H. salinarium* with 337 and 520 mg bound Au(III) per g dry biomass, respectively. With the low grade model ore, *D. radiodurans* and *X. campestris* showed highest gold loadings with more than 0.7 mg/g dry biomass. Compared to a real-life low grade ore with a gold content of 1 g/t rock, the biomass would consequently allow a more than 700-fold accumulation of the precious metal.

It needs to be pointed out that although showing rather low metal loads, the fungi *S*. *commune* and *T. reesei* are promising candidates for the described invention. This is due to the high cell densities reached by these strains in the employed growth media. Since substantial portions of the Au supply (31 and 100%, respectively) is adsorbed by the biomass even at 3 mM initial Au(III) concentration, it can be assumed that already a smaller aliquot of the used 50-ml culture would have been sufficient to accumulate the precious metal, increasing the metal load of the biomass.

**Table 1. Strains and cultivation conditions**

| Strain¹ | Phylogenetic group | Characteristics | Cultivation conditions |
|---|---|---|---|
| *Bacillus sphaericus* DSM 396 | Bacteria, Firmicutes | S-layer | 28°C, 180 rpm, Luria-Bertani Broth (LB) |
| *Bacillus fusiformis* DSM 2898T | Bacteria, Firmicutes | S-layer | 28°C, 180 rpm, LB |
| *Geobacillus stearothermophilus* DSM 2358 | Bacteria, Firmicutes | S-layer | 28°C, 180 rpm, LB |
| *Bacillus sphaericus* CCM 2177 | Bacteria, Firmicutes | S-layer | 28°C, 180 rpm, LB |
| *Lactobacillus acidophilus* DSM 20079 | Bacteria, Firmicutes | S-layer | 28°C, 180 rpm, DSM 11 medium |
| *Deinococcus radiodurans* DSM 20539 | Bacteria, Deinococci | S-layer | 28°C, 180 rpm, LB |
| *Corynebacterium glutamicum* HD⁵ | Bacteria, Actinobacteria | S-layer, polysaccharide | 28°C, 180 rpm, LB |
| *Halobacterium salinarum* DSM 670 | Archaea, Euryarchaea | S-layer | 28°C, 180 rpm, DSM 97 medium |
| *E. coli K-12* ATCC 47076 | Bacteria, Proteobacteria | LPS layer | 28°C, 180 rpm, LB |
| *Arthrobacter globiformis* DSM 20124 | Bacteria, Actinobacteria | Exopolysaccharide (EPS) | 28°C, 180 rpm, LB |
| *Xanthomonas campestris* HD⁵ | Bacteria, Proteobacteria | EPS | 28°C, 180 rpm, LB |
| *Pseudomonas fluorescens* DSM 50106 | Bacteria, Proteobacteria | LPS layer | 28°C, 180 rpm, LB |
| *Shewanella putrefaciens* HD⁵ | Bacteria, Proteobacteria | polysaccharide | 28°C, 180 rpm, LB |
| *Schizophyllum commune* CBS 343.81 | Fungi, Basidiomycetes | EPS | 28°C, 180 rpm, Dons medium² |
| *Trichoderma reesei* CBS 392.92 | Fungi, Acomycetes | EPS | 28°C, 180 rpm, Laktose medium³ |
| *Sclerotium rolfsii* ATCC26325 | Fungi, Basidiomycetes | EPS | 28°C, 180 rpm, Potato Dextrose Broth (PDA) |
| *Microcystis* sp. HD⁶ | Cyanobacteria, Chroococcales | Reductive capacity | 28°C, standing cultures, resuspension once per day, WC⁴ medium, 12h day/12 h night cycles |
| *Anabaena* sp. HD⁶ | Algae, Cyanobacteria, Nostocales | Reductive capacity | 28°C, standing cultures, resuspension once per day, WC medium, 12h day/12 h night cycles |
| *Aphanizomenon* sp. HD⁶ | Algae, Cyanobacteria, Nostocales | Reductive capacity | 28°C, standing cultures, resuspension once per day, WC medium, 12h day/12 h night cycles |
| *Planktothrix* sp. HD⁶ | Algae, Cyanobacteria, Oscillatoriales | Reductive capacity | 28°C, standing cultures, resuspension once per day, WC medium, 12h day/12 h night cycles |

| | | | |
|---|---|---|---|
| ¹ Strains designated "DSM" are available from DSMZ (German Collection of Microorganisms and Cell Cultures), "ATCC" means American Type Culture Collection, "CCM" indicates Czech Collection of Microorganisms, "CBS" is Centraalbureau voor Schimmelcultures (NL), and "HD" refers to BRAIN BioArchives ² Dons, JJM; de Vries, OMH; Wessels, JGH (1979) Biochim Biophy Acta, 563:100-112 ³ Bailey, MJ; Askolin, S; Hörhammer, N; Tenkanen, M; Linder, M; Pentillä, M; Nakari-Setälä, T (2002) Appl Microbiol Biotechnol 58:721-727 ⁴ Guillard, RRL. and Lorenzen, CJ (1972) Journal of Phycology, 8:10-14 ⁵ Corresponding strains can be obtained from DSMZ with strain numbers DSM 20300, DSM 1050, and DSM 6067 ⁶ Corresponding strains can be obtained from the Pasteur Culture Collection of Cyanobacteria (PCC) | | | |

**Table 2. Metal loads of biomass at different initial concentrations c₀ of Au(III)**

| Strain | c₀(Au³⁺) = **3 µM**: **µg** Au(III)/g dry biomass | c₀(Au³⁺) = **3 mM**: **mg** Au(III)/g dry biomass |
|---|---|---|
| *B. sphaericus* DSM 396 | 208 | 72 |
| *B. fusiformis* | 256 | 43 |
| *G. stearothermophilus* | 410 | 337 |
| *B.sphaericus* CCM 2177 | 217 | 37 |
| *L. acidophilus* | n.d. | n.d. |
| *D. radiodurans* | 730 | 36 |
| *C. glutamicum* | 230 | 25 |
| *H. salinarum* | 35 | 520 |
| *E. coli* | 137 | 32 |
| *A. globiformis* | 84 | 18 |
| *X. campestris* | 770 | 132 |
| *P. fluorescens* | 108 | 0.140 |
| *S. putrefaciens* | 144 | 28 |
| *S. commune* | 49 | 25 |
| *T. reesei* | 17 | 13 |
| *S. rolfsii* | 3 | 0.750 |

### References

Akcil, A. and T. Mudder (2003). "Microbial destruction of cyanide wastes in gold mining: process review." Biotechnol Lett 25(6): 445-50.
Blumer, C. and D. Haas (2000). "Mechanism, regulation, and ecological role of bacterial cyanide biosynthesis." Arch Microbiol 173(3): 170-7.
Dieluweit, S., D. Pum, et al. (1998). "Formation of a gold superlattice on an S-layer with square lattice symmetry." Supramol Sci 5: 15-19.
Gutnick, D. L. and H. Bach (2000). "Engineering bacterial biopolymers for the biosorption of heavy metals; new products and novel formulations." Appl Microbiol Biotechnol 54(4): 451-60.
Györvary, E., A. Schroedter, et al. (2004). "Formation of nanoparticle arrays on S-layer protein lattices." J Nanosci Nanotechnol 4(1-2): 115-20.
Hiebert, F. K. and P. C. Bennett (1992). "Microbial Control of Silicate Weathering in Organic-Rich Ground Water." Science 258(5080): 278-281.
Hughes, M. A., A. L. Sharif, et al. (1988). "The molecular biology of cyanogenesis." Ciba Found Symp 140: 111-30.
Iwahori, K., T. Tokutomi, et al. (2001). "Formation of stable foam by the cells and culture supernatant of Gordonia (Nocardia) amarae." J Biosci Bioeng 92(1): 77-9.
Korte, F., M. Spiteller, et al. (2000). "The cyanide leaching gold recovery process is a nonsustainable technology with unacceptable impacts on ecosystems and humans: the disaster in Romania." Ecotoxicol Environ Saf 46(3): 241-5.
Liu, W., X. Xu, et al. (2006). "Decomposition of silicate minerals by Bacillus mucilaginosus in liquid culture." Environ Geochem Health 28(1-2): 133-40.
Rawlings, D. E. and D. B. Johnson (2007). "The microbiology of biomining: development and optimization of mineral-oxidizing microbial consortia." Microbiology 153: 315-324.
Sara, M. and U. B. Sleytr (2000). "S-Layer proteins." J Bacteriol 182(4): 859-68.
Vieira, R. H. and B. Volesky (2000). "Biosorption: a solution to pollution?" Int Microbiol 3(1): 17-24.
Wahl, R., M. Mertig, et al. (2001). "Electron-beam induced formation of highly ordered palladium and platinum nanoparticle arrays on the S-layer of Bacillus sphaericus NCTC 9602." Adv Mater 13: 736-740.

## Claims

1. A cyanide-free process of isolating the precious metal gold from a particulate material containing particles of said precious metal in elemental form, comprising the following steps:
(i) preparing an aqueous mixture containing said particulate material and biomass comprising eubacteria having an S-layer or archaea having an S-layer;
(ii) incubating said aqueous mixture of step (i) for allowing binding of said precious metal to said biomass;
(iii) separating the biomass having bound metal from the aqueous mixture of step (ii); and
(iv) isolating the metal from said biomass separated in step (iii);
wherein said biomass comprises or consists of one or more organisms selected from *Bacillus sphaericus* such as *Bacillus sphaericus* CCM2177; Lactobacillus such as *Lactobacillus acidophilus;* Halobacterium such as *Halobacterium salinarum;* Xanthomonas such as *Xanthomonas campestris;* and Shewanella such as *Shewanella putrefaciens.*

2. The process according to claim 1, wherein the incubation step (ii) is carried out for 1 to 48 hours, preferably for 1 to 24 hours.

3. The process according to claim 1 or 2, wherein said particulate material is a mineral ore or a mineral mining waste material.

4. The process according to any one of claims 1 to 3, wherein said particulate material contains sulfidic minerals such as pyrite.

5. The process according to any one of claims 1 to 4, wherein said particulate material has an average particle size of at most 5 mm, preferably at most 1 mm, more preferably of at most 400 µm, and most preferably of at most 100 µm.

6. The process according to any one of claims 1 to 5, wherein step (iii) involves blowing of air into said aqueous dispersion for accumulating the biomass having bound metal at the surface of said aqueous mixture.

7. The process according any one of claims 1 to 6, wherein step (ii) comprises agitating said aqueous mixture for bringing said biomass in close contact with particles of said particulate material.

8. The process according to any one of claims 1 to 7, wherein said particulate material is treated with sulfide-oxidising bacteria for bioleaching said particulate composition before or concurrently to step (i).

9. The process according to claims 8, wherein said sulfide-oxidising bacteria are genetically-modified to express an S-layer on the surface of said bacteria.

10. The process according to any one of claims 1 to 9, wherein said biomass comprises or consists of one or more organisms selected from Deinococcus such as *Deinococcus radiodurans;* Escherichia such as *E*. *coli* K-12; Arthrobacter such as *Arthrobacter globiformis;* and Pseudomonas such *Pseudomonas fluorescens.*

11. The process according to any one of claims 1 to 10, wherein said gold in elemental form is present in finely dispersed or colloidal form in said aqueous mixture of step (i).

12. Use of biomass selected from the following organism classes: eubacteria and archaea containing an S-layer for isolating the precious metal gold from a particulate material containing said precious metal in elemental form; wherein said biomass comprises or consists of one or more organisms selected from *Bacillus sphaericus* such as *Bacillus sphaericus* CCM2177; Lactobacillus such as *Lactobacillus acidophilus;* Halobacterium such as *Halobacterium salinarum;* Xanthomonas such as *Xanthomonas campestris;* and Shewanella such as *Shewanella putrefaciens.*

## Patentansprüche

1. Cyanidfreies Verfahren zur Isolierung des Edelmetalls Gold aus einem partikulärem Material, das Partikel des Edelmetalls in elementarer Form enthält, wobei das Verfahren die folgenden Schritte umfasst:
(i) Herstellen einer wässrigen Mischung enthaltend das partikuläre Material und Biomasse, die Eubacteria mit einer S-Layer oder Archaea mit einer S-Layer enthält;
(ii) Inkubieren der wässrigen Mischung von Schritt (i), um ein Binden des Edelmetalls an die Biomasse zu ermöglichen;
(iii) Abtrennen der Biomasse, die gebundenes Metall enthält, von der wässrigen Mischung von Schritt (ii); und
(iv) Isolieren des Metalls aus der in Schritt (iii) abgetrennten Biomasse;
wobei die Biomasse einen oder mehrere Organismen ausgewählt aus *Bacillus sphaericus* wie *Bacillus sphaericus* CCM2177; Lactobacillus wie *Lactobacillus acidophilus;* Halobacterium wie *Halobacterium salinarum;* Xanthomonas wie *Xanthomonas campestris;* und Shewanella wie *Shewanella putrefaciens* enthält oder daraus besteht.

2. Das Verfahren gemäß Anspruch 1, worin der Inkubationsschritt (ii) über 1 bis 48 Stunden, vorzugsweise über 1 bis 24 Stunden durchgeführt wird.

3. Das Verfahren gemäß Anspruch 1 oder 2, worin das partikuläre Material ein Mineralerz oder mineralisches Bergbauabraumprodukt ist.

4. Das Verfahren gemäß einem der Ansprüche 1 bis 3, worin das partikuläre Marterial sulfidische Mineralien wie Pyrit enthält.

5. Das Verfahren gemäß einem der Ansprüche 1 bis 4 , worin das partikuläre Material eine durchschnittliche Partikelgröße von höchstens 5 mm, vorzugsweise höchstens 1 mm, bevorzugter höchstens 400 µm und am bevorzugtesten von höchstens 100 µm aufweist.

6. Das Verfahren gemäß einem der Ansprüche 1 bis 5, worin Schritt (iii) ein Einblasen von Luft in die wässrige Dispersion umfasst, um die Biomasse, die gebundenes Metall enthält, auf der Oberfläche der wässrigen Mischung zu akkumulieren.

7. Das Verfahren gemäß einem der Ansprüche 1 bis 6, worin Schritt (ii) ein Umwälzen der wässrigen Mischung umfasst, um die Biomasse in engen Kontakt mit den Partikeln des partikulärem Materials zu bringen.

8. Das Verfahren gemäß einem der Ansprüche 1 bis 7, worin das partikuläre Material mit Sulfid-oxidierenden Bakterien behandelt wird, um die partikuläre Zusammensetzung vor oder gleichzeitig mit Schritt (i) auszulaugen.

9. Das Verfahren gemäß Anspruch 8, wobei die Sulfid-oxidierenden Bakterien genetisch modifiziert sind, um eine S-Layer auf der Oberfläche der Bakterien zu exprimieren.

10. Das Verfahren gemäß einem der Ansprüche 1 bis 9, wobei die Biomasse einen oder mehrere Organismen ausgewählt aus Deinococcus wie *Deinococcus radiodurans;* Escherichia wie *E.coli* K-12; Arthrobacter wie *Arthrobacter globiformis;* und Pseudomonas wie *Pseudomonas fluorescens* umfasst oder daraus besteht.

11. Das Verfahren gemäß einem der Ansprüche 1 bis 10, wobei das Gold in elementarer Form in feinverteilter oder kolloidaler Form in der wässrigen Mischung von Schritt (i) vorliegt.

12. Verwendung von Biomasse, ausgewählt aus den folgenden Organismenklassen:
Eubacteria und Archaea, die eine S-Layer enthalten, zum Isolieren des Edelmetalls Gold aus einem partikulärem Material, das das Edelmetall in elementarer Form enthält, wobei die Biomasse einen oder mehrere Organismen ausgewählt aus *Bacillus sphaericus* wie *Bacillus sphaericus* CCM2177; Lactobacillus wie *Lactobacillus acidophilus;* Halobacterium wie *Halobacterium salinarum;*
Xanthomonas wie *Xanthomonas campestris;* und Shewanella wie *Shewanella putrefaciens* enthält oder daraus besteht.

## Revendications

1. Procédé sans cyanure pour isoler le métal précieux qu'est l'or à partir d'un matériau particulaire contenant des particules dudit métal précieux sous forme élémentaire, comprenant les étapes suivantes :
(i) préparation d'un mélange aqueux contenant ledit matériau particulaire et une biomasse comprenant des eubactéries ayant une couche S ou des archéobactéries ayant une couche S ;
(ii) incubation dudit mélange aqueux de l'étape (i) pour permettre la liaison dudit métal précieux à ladite biomasse ;
(iii) séparation de la biomasse ayant le métal lié d'avec le mélange aqueux de l'étape (ii) ; et
(iv) isolation du métal à partir de ladite biomasse séparée dans l'étape (iii) ;
dans lequel ladite biomasse comprend ou est constituée d'un ou plusieurs organismes choisis parmi *Bacillus sphaericus* tel que *Bacillus sphaericus* CCM2177 ; Lactobacillus tel que *Lactobacillus acidophilus* ; Halobacterium tel que *Halobacterium salinarum* ; Xanthomonas tel que *Xanthomonas campestris ;* et Shewanella tel que *Shewanella putrefaciens.*

2. Procédé selon la revendication 1, dans lequel l'étape d'incubation (ii) est mise en oeuvre pendant 1 à 48 heures, de préférence 1 à 24 heures.

3. Procédé selon la revendication 1 ou 2, dans lequel ledit matériau particulaire est un minerai minéral ou un matériau résiduel d'opération minière minéral.

4. Procédé selon l'une quelconque des revendications 1 à 3, dans lequel ledit matériau particulaire contient des minéraux sulfuriques tels que la pyrite.

5. Procédé selon l'une quelconque des revendications 1 à 4, dans lequel ledit matériau particulaire a une granulométrie moyenne d'au plus 5 mm, de préférence d'au plus 1 mm, plus préférablement d'au plus 400 µm, et le plus préférablement d'au plus 100 µm.

6. Procédé selon l'une quelconque des revendications 1 à 5, dans lequel l'étape (iii) met en oeuvre le soufflage d'air dans ladite dispersion aqueuse pour accumuler la biomasse ayant le métal lié à la surface dudit mélange aqueux.

7. Procédé selon l'une quelconque des revendications 1 à 6, dans lequel l'étape (ii) comprend l'agitation dudit mélange aqueux pour porter ladite biomasse en contact étroit avec des particules dudit matériau particulaire.

8. Procédé selon l'une quelconque des revendications 1 à 7, dans lequel ledit matériau particulaire est traité avec des bactéries oxydant les sulfures pour une biolixiviation de ladite composition particulaire avant ou en même temps que l'étape (i).

9. Procédé selon la revendication 8, dans lequel lesdites bactéries oxydant les sulfures sont génétiquement modifiées pour exprimer une couche S sur la surface desdites bactéries.

10. Procédé selon l'une quelconque des revendications 1 à 9, dans lequel ladite biomasse comprend ou est constituée d'un ou plusieurs organismes choisis parmi Deinococcus tel que *Deinococcus radiodurans ;* Escherichia tel qu'*E*. *coli* K-12 ; Arthrobacter tel qu'*Arthrobacter globiformis ;* et Pseudomonas tel que *Pseudomonas fluorescens.*

11. Procédé selon l'une quelconque des revendications 1 à 10, dans lequel ledit or sous forme élémentaire est présent sous forme finement dispersée ou colloïdale dans ledit mélange aqueux de l'étape (i).

12. Utilisation d'une biomasse choisie parmi les classes suivantes d'organismes : eubactéries et archéobactéries contenant une couche S pour isoler le métal précieux qu'est l'or à partir d'un matériau particulaire contenant ledit métal précieux sous forme élémentaire ; dans laquelle ladite biomasse comprend ou est constituée d'un ou plusieurs organismes choisis parmi *Bacillus sphaericus* tel que *Bacillus sphaericus* CCM2177 ; Lactobacillus tel que *Lactobacillus acidophilus* ; Halobacterium tel que *Halobacterium salinarum* ; Xanthomonas tel que *Xanthomonas campestris ;* et Shewanella tel que *Shewanella putrefaciens.*
